# EUROPÄISCHE PATENTANMELDUNG

(11) **EP 2 822 133 A1**
(43) Veröffentlichungstag der Anmeldung: **07.01.2015**
(21) Anmeldenummer: 13174859.2
(22) Anmeldetag: 03.07.2013
(51) Int. Cl.: H02J 1/10

(54) **Automatisierungsgerät mit Lastverteilungs-Controller**

(71) Anmelder: Siemens Aktiengesellschaft, 80333 München (DE)
(72) Erfinder: Marenski, Dirk, 76131 Karlsruhe (DE)

(57) **Zusammenfassung**

Die Erfindung betrifft ein Automatisierungsgerät mit an eine Versorgungsleitung (P1, P2) angeschlossenen Senkenmodulen (9, 10, 11, ... N), mit mindestens zwei parallel geschalteten Quellenmodulen (4, 5, 6) zur Versorgung der Senkenmodule (9, 10, 11, ... N) mit elektrischer Energie. Jedes der mindestens zwei Quellenmodule (4, 5, 6) ist zur Beaufschlagung der Versorgungsleitung (P1, P2) mit einer Ausgangsspannung vorgesehen, wobei die mindestens zwei Quellenmodule (4, 5, 6) jeweils einen an einen Lastverteilungs-Bus (2) angeschlossenen Lastverteilungs-Controller (3) zur Symmetrierung eines auf eine Nennleistung des jeweiligen Quellenmoduls (4, 5, 6) bezogenen prozentualen Auslastungsgrades aufweisen, wobei ferner der jeweilige Lastverteilungs-Controller (3) den Auslastungsgrad des jeweiligen Quellenmoduls (4, 5, 6) auf dem Lastverteilungs-Bus (2) anzeigt. Es werden Maßnahmen vorgeschlagen, mittels welcher die jeweiligen Lastverteilungs-Controller (3) den Auslastungsgrad der jeweiligen Quellenmodule (4, 5, 6) am LS-Bus (2) anzeigen.

## Beschreibung

Die Erfindung betrifft ein Automatisierungsgerät mit an eine Versorgungsleitung angeschlossenen Senkenmodulen und mit mindestens zwei parallel geschalteten Quellenmodulen zur Versorgung der Senkenmodule mit elektrischer Energie, wobei jedes der mindestens zwei Quellenmodule zur Beaufschlagung der Versorgungsleitung mit einer Ausgangsspannung vorgesehen ist, wobei die mindestens zwei Quellenmodule jeweils einen an einen Lastverteilungs-Bus angeschlossenen Lastverteilungs-Controller zur Symmetrierung eines auf eine Nennleistung des jeweiligen Quellenmoduls bezogenen prozentualen Auslastungsgrades aufweisen, und wobei der jeweilige Lastverteilungs-Controller den Auslastungsgrad des jeweiligen Quellenmoduls auf dem Lastverteilungs-Bus anzeigt.

Häufig sind parallel geschaltete Quellenmodule bzw. Stromversorgungen jeweils mit Lastverteilungs-Controllern (so genannten Loadshare-Controllern) versehen, welche dazu vorgesehen sind, die prozentuale Auslastung der Stromversorgungen zu symmetrieren. Für den Fall, dass sich die Leistungsabgabe einer der Stromversorgungen des Automatisierungsgerätes erhöht, z. B. weil eine weitere Baugruppe bzw. ein weiteres Senkenmodul diesem Automatisierungsgerät hinzugefügt wird oder eine bereits vorhandene Baugruppe von einem STOPP- in einen RUN-Betrieb schaltet, führt dies kurzzeitig zu einer unsymmetrischen Lastverteilung; denn die genannten Controller bewerkstelligen aufgrund einer geringen Regelfrequenz von gewöhnlich 10 Hz nicht unverzüglich eine auf die jeweilige Nennleistung bezogene symmetrische Lastverteilung, z. B. in der Art, dass jede der Stromversorgungen 80 % oder 100 % ihrer Nennleistung zur Versorgung des Automatisierungsgerätes mit elektrischer Energie abgibt.

In den Lastverteilungs-Controllern ist gewöhnlich jeweils eine Kennlinie hinterlegt, welche einen auf die Nennleistung des jeweiligen Quellenmoduls bezogenen prozentualen Auslastungsgrad dieses Quellenmoduls in Abhängigkeit einer an einem Lastverteilungs-Bus (Loadshare-Bus) anliegenden Spannung (Loadshare-Spannung) repräsentiert. Beispielsweise weist eine 5 V-Loadshare-Spannung darauf hin, dass zwei Quellenmodule jeweils zu 50% ausgelastet sind, wobei ein 60 W-Quellenmodul in diesem Fall 30 W und ein 40 W- Quellenmodul 20 W - also eine Gesamtleistung von 50 W - den an eine Versorgungsleitung angeschlossenen Senkenmodulen bereitstellen. Unabhängig von der Nennleistung des jeweiligen Quellenmoduls stimmt der prozentuale Auslastungsgrad aller Quellenmodule überein, wobei die Quellenmodule die Versorgungsleitung gewöhnlich mit einer 15 V-Versorgungsspannung beaufschlagen. Jeder der Lastverteilungs-Controller zeigt den weiteren Lastverteilungs-Controllern seinen jeweiligen Auslastungsgrad an, indem dieser Lastverteilungs-Controller den LS-Bus mit einer diesen Auslastungsgrad repräsentierenden analogen Loadshare-Spannung beaufschlagt. Derartige Maßnahmen sind störanfällig und können die Anzeige der Auslastung bzw. der Lastverteilungsinformation verfälschen.

Der Erfindung liegt daher die Aufgabe zugrunde, ein Automatisierungsgerät der eingangs genannten Art zu schaffen, welches derartige Nachteile vermeidet.

Diese Aufgabe wird dadurch gelöst, dass der jeweilige Lastverteilungs-Controller der Quellenmodule den Auslastungsgrad in Form eines pulsbreitenmodulierten Signals anzeigt, welches einen dominanten und einen rezessiven Pegel aufweist, wobei die Länge des dominanten Pegels den Auslastungsgrad des jeweiligen Quellenmoduls repräsentiert.

Die Erfindung geht von der Idee aus, die Lastverteilungsinformation in einer Tastverhältnisinformation eines PWM-Signals (pulsweiten- bzw. pulsbreitenmoduliertes Signal) zu codieren, welches einfach und störsicher über eine Leitung bzw. einen Bus übertragen werden kann.

In einer Ausgestaltung der Erfindung sind die Quellenmodule dazu ausgebildet, den Zyklus der pulsbreitenmodulierten Signale zu synchronisieren, wobei der Lastverteilungs-Bus an einen Pull-Up-Widerstand und die Quellenmodule jeweils mit einem Open-Collector-Ausgang an den Lastverteilungs-Bus angeschlossen sind. Dadurch kann mit einfachen schaltungstechnischen Maßnahmen ein Low-Pegel als dominanter Pegel erzeugt werden. Die Lastverteilungs-Controller der Quellenmodule erzeugen jeweils ein pulsweiten- bzw. pulsbreitenmoduliertes Signal, wobei das auf dem Lastverteilungs-Bus anliegende resultierende Signal dem des am höchsten ausgelasteten Quellenmoduls entspricht, weil der dominante Low-Pegel des Lastverteilungs-Controllers dieses Quellenmoduls den jeweiligen High-Pegel der Lastverteilungs-Controller der geringer ausgelasteten Quellenmodule überlagert.

In einer weiteren Ausgestaltung der Erfindung sind die jeweiligen Lastverteilungs-Controller dazu ausgebildet, das jeweils erzeugte pulsbreitenmodulierte Signal mit dem am Lastverteilungs-Bus anliegenden pulsbreitenmodulierten Signal zu vergleichen. Die Quellenmodule können dadurch ihren jeweiligen Auslastungsgrad im Vergleich zum resultierenden Auslastungsgrad erkennen. Falls die jeweiligen Quellenmodule erkennen, dass die Länge des dominanten Low-Pegels des resultierenden Signals länger ist als die Länge des Low-Pegels ihres jeweiligen pulsbreitenmodulierten Signals, erhöhen diese Quellenmodule ihren jeweiligen Auslastungsgrad. Dieser jeweilige Auslastungsgrad wird solange erhöht, bis alle Quellenmodule den gleichen Auslastungsgrad aufweisen. Dies bedeutet, dass die Längen der Low-Pegel der jeweiligen pulsbreitenmodulierten Signale der jeweiligen Lastverteilungs-Controller gleich sind.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
Figur 1 ein Prinzipschaltbild von Bestandteilen eines Automatisierungsgerätes,
Figur 2 pulsweitenmodulierte Signale von Lastverteilungs-Controllern,
Figur 3 Bestandteile eines Lastverteilungs-Controllers und
Figur 4 Arbeitsschritte eines Lastverteilungs-Controllers.

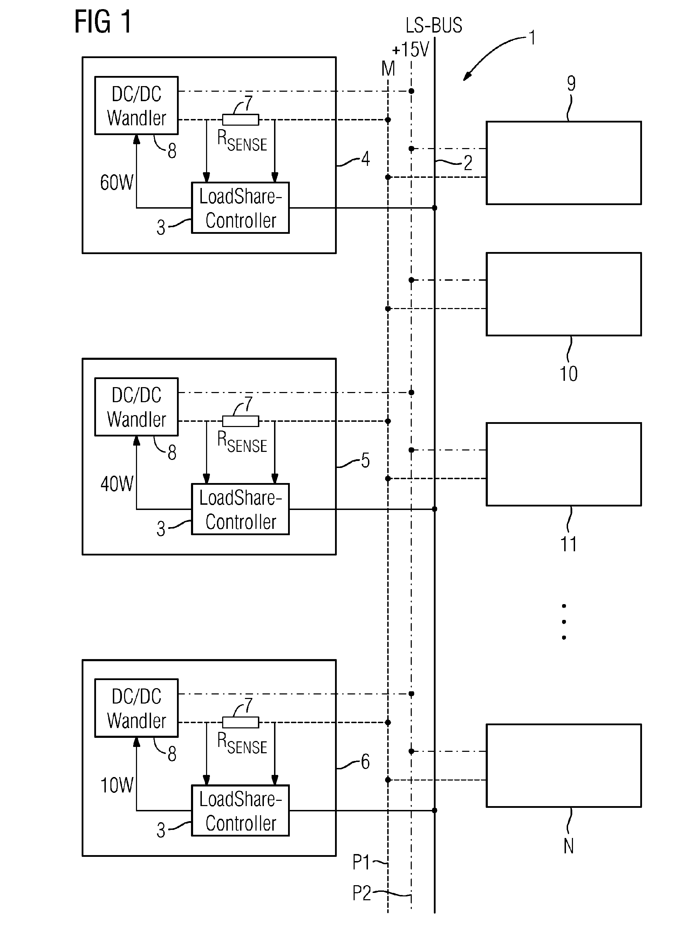

Die in den Figuren 1 bis 4 dargestellten gleichen Teilen sind mit gleichen Bezugszeichen versehen.

In Figur 1 sind mit 1 Bestandteile eines Automatisierungsgerätes bezeichnet, wobei der Einfachheit halber lediglich Teile zur Verdeutlichung der Erfindung dargestellt sind. An einen LS-Bus 2 (Loadshare-Bus) des Automatisierungsgerätes 1 sind Lastverteilungs-Controller 3 von Quellenmodulen 4, 5, 6 angeschlossen, von denen eines dieser Quellenmodule als CPU-Modul des Automatisierungsgerätes 1 ausgebildet sein kann. Die Quellenmodule 4, 5, 6 sind zur Versorgung der an eine Versorgungsleitung in Form von Potentialleitungen P1, P2 angeschlossen Senkenmodule 9, 10, 11, ... N mit elektrischer Energie vorgesehen, wobei die jeweiligen Quellenmodule ferner dazu ausgelegt sind, die Senkenmodule 9, 10, 11, ... N kurzzeitig mit der 1,5-fachen Nennleistung zu versorgen. Die Quellenmodule 4, 5, 6 weisen jeweils einen DC/DC-Wandler 8 auf, der aus einer Gleichspannung eine geeignete Ausgangsspannung für die Senkenmodule 9, 10, 11, ... N bereitstellt. Ferner sind die Quellenmodule 4, 5, 6 jeweils mit einem Messwiderstand 7 versehen, mittels welchem die jeweiligen Lastverteilungs-Controller 3 einen Teil eines Gesamt-Laststroms der Senkenmodule 9, 10, 11, ... N erfassen. Diese Senkenmodule 9, 10, 11, ... N sind beispielsweise als analoge oder als digitale Ein-/Ausgabebaugruppen ausgebildet.

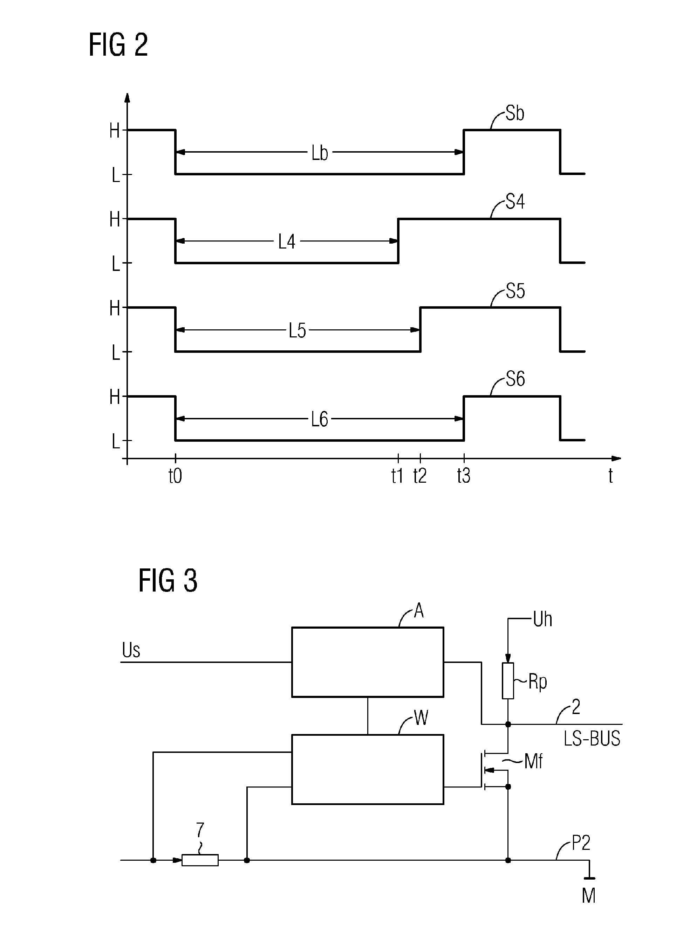

Die Quellemodule 4, 5, 6 zeigen ihren jeweiligen Auslastungsgrad mittels eines pulsweitenmodulierten Signals an, wobei die Länge eines dominanten Pegels dieses Signals den Auslastungsgrad repräsentiert. Zur näheren Erläuterung wird dazu auf Figur 2 verwiesen, in welcher mittels der Lastverteilungs-Controller 3 erzeugte pulsweitenmodulierte Signale dargestellt sind.

Im vorliegenden Beispiel wird angenommen, dass während des Hochlaufs des Automatisierungsgerätes das Quellenmodul 4 zu 50%, das Quellmodul 5 zu 55% und das Quellenmodul 6 zu 65% ausgelastet ist. Die Lastverteilungs-Controller 3 der Quellenmodule 4, 5, 6 erzeugen dazu ab einem Zeitpunkt t0 zyklisch entsprechend diesen Auslastungsgraden korrespondierende pulsweitenmodulierte Signale S4, S5, S6 und führen diese Signale S4, S5, S6 dem LS-Bus 2 zu. Der Lastverteilungs-Controller 3 des Quellenmoduls 4 erzeugt ein Signal S4 mit einem dominanten Low-Pegel L einer Länge L4, die dem Auslastungsgrad von 50% entspricht, der Lastverteilungs-Controller 3 des Quellenmoduls 5 ein Signal S5 mit einem dominanten Low-Pegel L einer Länge L5, die den Auslastungsgrad von 55% repräsentiert. Der Lastverteilungs-Controller 3 des Quellenmoduls 6 erzeugt ein Signal S6 mit einem dominanten Low-Pegel L einer dem Auslastungsgrad von 65% entsprechenden Länge L6. Ein derartiger dominanter Low-Pegel L wird verwirklicht, indem der jeweilige Lastverteilungs-Controller 3 der Quellenmodule 4, 5, 6 mit einem Open-Collector-Ausgang an den LS-Bus angeschlossen ist und indem der LS-Bus 2 mit einem Pull-Up-Widerstand versehen ist. Dieser dominante Low-Pegel L der Länge L6 des Signals S6, überlagert einen High-Pegel H des Signals S4 ab einem Zeitpunkt t1 und einen High-Pegel H des Signals S5 ab einem Zeitpunkt t2, wodurch auf dem LS-Bus 2 ein resultierendes Signal Sb anliegt, dessen Verlauf und dessen Low-Pegel Lb dem des Signals S6 des Quellenmoduls 6 entsprechen. Wie erläutert, zeigt dieses Signal S6 eine 65%ige Auslastung an.

Es wird im Folgenden auf Figur 3 verwiesen, in der Bestandteile des Lastverteilungs-Controllers 3 dargestellt sind. Für den Fall, dass eine am Messwiderstand 7 abfallende Spannung, welche einem über diesen Messwiderstand 7 fließenden Teil des Gesamt-Laststroms entspricht, kleiner ist als eine Hilfsspannung Uh, steuert ein Wandler W einen steuerbaren Schalter in Form eines selbstsperrenden n-Kanal-MOSFET Mf derart an, dass dieser geöffnet bzw. gesperrt bleibt. Dadurch wird der Pegel eines Signals auf dem LS-Bus 2 aufgrund einer Hilfsspannung Uh und mittels eines Pull-Up-Widerstands Rp auf einen High-Pegel gezogen. Dagegen schließt der Wandler W den Schalter für den Fall, dass die am Messwiderstand 7 abfallende Spannung größer ist als die Hilfsspannung Uh, wodurch der SignalPegel auf dem LS-Bus 2 sofort auf Low gezogen wird.

Die Ausgänge der derart ausgebildeten Lastverteilungs-Controller 3 der Quellenmodule 4, 5, 6 sind über den LS-Bus 2 gemäß einer Wired-OR-Verdrahtung miteinander verbunden, wodurch das pulsweitenmodulierte Signal des Lastverteilungs-Controllers 3 am LS-Bus 2 anliegt, dessen Low-Pegel L am Längsten ist. Für den Fall, dass eine Auswerteeinheit A eines dieser Lastverteilungs-Controller 3 eines der Quellenmodule 4, 5, 6 erkennt, dass der Low-Pegel seines erzeugten pulsweitenmodulierten Signals kürzer ist als der Low-Pegel des auf dem LS-Bus anliegenden Signals, erhöht die Auswerteeinheit eine Soll-Ausgangsspannung Us, z. B. von 15 V auf 15,2 V. Dadurch erhöht sich der Stromanteil dieses Quellenmoduls am Gesamt-Laststrom. Für den Fall dagegen, dass die Auswerteeinheit A erkennt, dass der Low-Pegel gleich dem Low-Pegel des auf dem LS-Bus anliegenden Signals ist, verringert die Auswerteeinheit A die Soll-Ausgangsspannung Us bis auf den Minimalwert (Minimalwert ist gleich Anfangswert), wodurch sich der Stromanteil am Gesamt-Laststrom verringert.

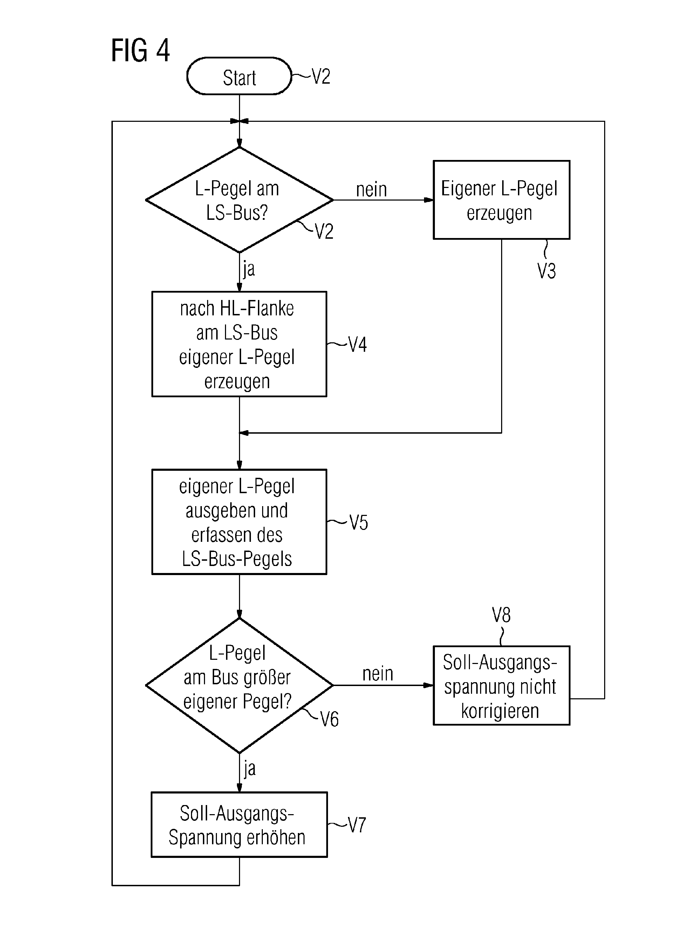

Die Lastverteilungs-Controller 3 erzeugen zyklisch ihre pulsweitenmodulierten Signale, wobei die jeweilige Auswerteeinheit A während eines Zyklus zunächst prüft, ob bereits am LS-Bus 2 ein Low-Pegel eines Signals anliegt. Zur näheren Erläuterung wird auf Figur 4 verwiesen, in welcher Arbeitsschritte des Lastverteilungs-Controllers 3 eines Quellenmoduls dargestellt sind.

Nach einem Start V1 wird zunächst im Rahmen eines Schrittes V2 geprüft, ob am LS-Bus 2 bereits ein Low-Pegel eines Signals eines weiteren Lastverteilungs-Controllers 3 anliegt. Für den Fall, dass noch kein Low-Pegel anliegt, erzeugt der Lastverteilungs-Controller 3 ein Signal mit einem Low-Pegel entsprechend dem Auslastungsgrad des Quellenmoduls (Schritt V3) und belegt in einem Schritt V5 den LS-Bus mit dem Low-Pegel seines Signals, wobei ferner der Low-Pegel am LS-Bus 2 erfasst wird. Für den Fall, dass im Rahmen des Schrittes V2 erkannt wird, dass der LS-Bus 2 mit einem Low-Pegel belegt ist, erzeugt der Lastverteilungs-Controller 3 zum Zeitpunkt t0 (Figur 2) nach einer HL-Flanke des LS-Bus-Signals einen Low-Pegel. Im Rahmen eines Schrittes V5 gibt der Lastverteilungs-Controller 3 diesen Low-Pegel aus und erfasst ferner den Low-Pegel am LS-Bus 2. Für den Fall, dass die Länge des erfassten Low-Pegels am LS-Bus 2 größer ist als die Länge des eigenen Low-Pegels, was die Auswerteeinheit A des Lastverteilungs-Controllers 3 in einem Schritt V6 erkennt, erhöht der Lastverteilungs-Controller 3 in einem Schritt V7 die Soll-Ausgangsspannung Us, ansonsten lässt die Auswerteinheit A die Soll-Ausgangsspannung Us in einem Schritt V8 unverändert.

## Patentansprüche

1. Automatisierungsgerät mit
- an eine Versorgungsleitung (P1, P2) angeschlossenen Senkenmodulen (9, 10, 11, ... N),
- mindestens zwei parallel geschalteten Quellenmodulen (4, 5, 6) zur Versorgung der Senkenmodule (9, 10, 11, ... N) mit elektrischer Energie, wobei
- jedes der mindestens zwei Quellenmodule (4, 5, 6) zur Beaufschlagung der Versorgungsleitung (P1, P2) mit einer Ausgangsspannung vorgesehen ist, und
- die mindestens zwei Quellenmodule (4, 5, 6) jeweils einen an einen Lastverteilungs-Bus (2) angeschlossenen Lastverteilungs-Controller (3) zur Symmetrierung eines auf eine Nennleistung des jeweiligen Quellenmoduls (4, 5, 6) bezogenen prozentualen Auslastungsgrades aufweisen, wobei der jeweilige Lastverteilungs-Controller (3) den Auslastungsgrad des jeweiligen Quellenmoduls (4, 5, 6) auf dem Lastverteilungs-Bus (2) anzeigt,
**dadurch gekennzeichnet, dass** der jeweilige Lastverteilungs-Controller (3) der Quellenmodule (4, 5, 6) den Auslastungsgrad in Form eines pulsbreitenmodulierten Signals (S4, S5, S6) anzeigt, welches einen dominanten und einen rezessiven Pegel (L, H) aufweist, wobei die Länge (L4, L5, L6) des dominanten Pegels (L) den Auslastungsgrad des jeweiligen Quellenmoduls (4, 5, 6) repräsentiert.

2. Automatisierungsgerät nach Anspruch 1, **dadurch gekennzeichnet, dass** die Quellenmodule (4, 5, 6) dazu ausgebildet sind, den Zyklus der pulsbreitenmodulierten Signale (S4, S5, S6) zu synchronisieren, dass der Lastverteilungs-Bus 2 mit einem Pull-Up-Widerstand (Rp) versehen ist und dass die Quellenmodule (4, 5, 6) mit einem Open-Collector-Ausgang an den Lastverteilungs-Bus (2) angeschlossen sind.

3. Automatisierungsgerät nach Anspruch 1 oder 2, **dadurch gekennzeichnet, dass** die jeweiligen Lastverteilungs-Controller (3) dazu ausgebildet sind, das jeweils erzeugte pulsbreitenmodulierte Signal (S4, S5, S6) mit dem am Lastverteilungs-Bus (2) anliegenden pulsbreitenmodulierten Signal (Sb) zu vergleichen.
